# FASCICULE DE BREVET EUROPEEN

(11) **EP 3 931 753 B1**
(45) Date de publication et mention de la délivrance du brevet: **05.07.2023**
(21) Numéro de dépôt: 20710248.4
(22) Date de dépôt: 19.02.2020
(51) Int. Cl.: G06K 19/07

(54) **CIRCUIT POUR ÉTIQUETTE DE RADIO-IDENTIFICATION PASSIVE FONCTIONNANT DANS UNE BANDE UHF ET PROCÉDÉ POUR OPÉRER UN CIRCUIT**
SCHALTUNG FÜR EIN PASSIVES FUNKIDENTIFIKATIONSETIKETT MIT BETRIEB IN EINEM UHF-BAND UND VERFAHREN ZUM BETRIEB EINER SCHALTUNG
CIRCUIT FOR A PASSIVE RADIO IDENTIFICATION TAG OPERATING IN A UHF BAND AND METHOD FOR OPERATING A CIRCUIT

(30) Priorité: 28.02.2019 FR 1902064
(43) Date de publication de la demande: 05.01.2022
(73) Titulaire: Asygn, 38000 Grenoble (FR)
(72) Inventeur: GEYNET, Lionel D., 30250 AUBAIS (FR); DELORME, Nicolas, 38000 GRENOBLE (FR)
(74) Mandataire: Cabinet Beau de Loménie
(86) Numéro de dépôt international: PCT/FR2020/050306
(87) Numéro de publication internationale: WO 2020/174159

(56) Documents cités:
- WO-A1-2014/167080
- FR-A1- 3 058 216
- US-B1- 6 720 866

## Description

### Domaine Technique

L'invention est relative à des dispositifs sans contact, par exemple de type RFID, comprenant des capteurs pour enregistrer des événements sur une longue durée sans nécessiter une alimentation électrique externe. L'invention est notamment relative à des circuits pour étiquette de radio-identification passive fonctionnant dans une bande UHF, configuré pour une communication radio avec un lecteur qui émet un signal de lecture périodique, dans lequel une période du signal de lecture comprend une phase de récupération de l'énergie et une phase de communication.

### Technique antérieure

De manière connue dans l'état de la technique, un circuit du type RFID (de l'anglais « Radio Frequency Identification ») peut servir comme radio-étiquette (ou « RFID tag » en anglais) appelé également marqueur et est associé à un objet à surveiller. Le circuit comprend ou est connecté optionnellement par une interface avec un capteur pour mesurer au moins certains paramètres physiques relatifs à cet objet comme par exemple la température ambiante, l'humidité ou encore l'accélération.

Le circuit se présente généralement sous la forme d'une étiquette autocollante collée sur l'objet à surveiller ou encore sous la forme d'une puce intégrée dans l'objet à surveiller. L'objet à surveiller est par exemple un équipement industriel, une marchandise, un produit ou un organisme vivant dont la surveillance à travers au moins un paramètre physique mesuré est nécessaire.

De manière générale, un tel capteur comporte un module de mémorisation apte à stocker des mesures acquises par le module de mesure, une antenne apte à transmettre ces mesures à un interrogateur via des signaux électromagnétiques et une source d'énergie électrique permettant d'alimenter notamment le module de mesure.

Un tel système comprend classiquement un lecteur ou interrogateur RFID et un circuit (ou tag) RFID (ou une pluralité de circuits) attaché ou fixé à l'objet à suivre. Le lecteur RFID émet généralement un signal UHF, appelé signal d'interrogation, à destination du circuit RFID. L'utilisation de signaux UHF présente les avantages suivants: vitesse de communication élevée, possibilité de communiquer avec un grand nombre de tags simultanément.

Les tags RFID employés dans ces systèmes sont classiquement des tags passifs, à savoir qu'ils ne comportent pas de batterie ou de moyen de stockage d'énergie. Ces tags utilisent l'énergie contenue dans la porteuse du signal du lecteur pour renvoyer une version modulée du signal du lecteur vers le lecteur RFID. Au moins une partie de l'énergie du signal d'interrogation est récupérée par un dispositif de collecte d'énergie pour alimenter les composants du tag. Les tags passifs ont pour avantage d'être légers et peu onéreux et d'avoir une longue durée de vie.

Un tag RFID passif est décrit p.ex. dans le document FR3015729 (A1) ou par C. Felini et. al. « Fully RF Powered UHF-RFID Sensors Platform », Procedia Engineering 87 (2014) 1346 - 1349. Des tags RFID sont aussi connus de US20080136619A1, US20130099897A1, US6720866B1, CN104361388A, US9789738B2, ou US20100231407A1.

L'emploi combiné de signaux d'interrogation UHF et de tags passifs présente toutefois l'inconvénient d'avoir une distance de lecture faible (surtout dans les cas où le circuit est connecté avec un capteur), p.ex. de moins de 20 cm, car l'énergie récupérée par le tag passif est limitée. Dans ce contexte, l'utilisation d'un capteur externe connecté avec le circuit par une interface peut consommer la plupart de l'énergie, surtout, si ce capteur comprend de l'électronique discrète (ou des composants numériques), l'interface est une interface numérique (p.ex. SPI ou I2C), et/ou le canal pour acquérir le signal du capteur externe consomme trop d'énergie. Par ailleurs, le temps de lecture peut être très long, p.ex. durer plus de 500ms. En outre, un système comprenant un circuit et un capteur externe connecté par une interface peuvent avoir une taille élevée, si une interface numérique est utilisée.

FR3058216A1 concerne un capteur du type RFID propre à être associé à un objet à surveiller et comportant un module de mesure permettant de générer au moins une mesure relative à au moins un paramètre physique de l'objet à surveiller et un module de communication permettant de communiquer avec un interrogateur pour lui transmettre la ou chaque mesure générée par l'intermédiaire des signaux électromagnétiques.

D'autres types de circuits pour étiquette de radio-identification sont connus par exemple de US6720866B1 et WO2014167080A1.

### Exposé de l'invention

L'invention a pour but de pallier tout ou partie des inconvénients précités, notamment de permettre une distance de lecture élevée, p.ex. jusqu'à 3 mètres, et un système comprenant un circuit et un capteur externe connecté par une interface avec des dimensions réduites. En outre, l'invention a pour but la conformité avec le Protocol EPC UHF Gen2 Air Interface.

A cet effet, l'invention propose un circuit pour étiquette de radio-identification passive fonctionnant dans une bande UHF, selon la revendication 1.

Par conséquent, grâce à une telle interface, un capteur analogique peut être connecté directement avec le circuit, qui consomme moins d'énergie qu'un capteur numérique qui comprend des éléments/circuits électroniques additionnels. En outre grâce à la possibilité d'acquérir, d'amplifier et de numériser la mesure du capteur pendant la phase d'acquisition, qui est pendant la phase de récupération de l'énergie et donc avant la phase de communication et donc dans une seule période du signal de lecture périodique, cette mesure peut être transmise au lecteur directement au cours de cette phase de communication, c'est-à-dire pendant la même période. Par conséquent le délai de réponse du circuit peut être réduit. Il est donc possible de lire (interroger) plusieurs circuits externes très rapidement. Par exemples, des objets comprenant des circuits selon l'invention peuvent être positionnés ensemble dans une caisse et être lus chacun très rapidement. Selon un autre exemple il est possible de mesurer la pression d'un pneu au passage du véhicule devant un portique.

Le dispositif de commande peut être configuré pour : démarrer pendant une phase de démarrage, la phase de démarrage étant avant la phase d'acquisition et pendant la même phase de récupération de l'énergie.

La phase de récupération de l'énergie peut comprendre en outre avant la phase de démarrage une phase de récupération de l'énergie initiale, pendant laquelle le circuit est éteint et exclusivement accumule une réserve d'énergie à partir de l'onde radio. Par conséquent, un démarrage fiable peut être assuré, car le niveau d'énergie accumulé est suffisamment élevé.

La phase de récupération de l'énergie peut comprendre en outre entre la phase de démarrage et la phase d'acquisition une première phase de récupération de l'énergie intermédiaire, pendant laquelle le circuit est éteint et exclusivement accumule une réserve d'énergie à partir de l'onde radio.

Par conséquent, une acquisition fiable de la mesure peut être assurée, car le niveau d'énergie accumulé est suffisamment élevé.

La phase de récupération de l'énergie peut comprendre en outre après la phase d'acquisition et avant la phase de communication une deuxième phase de récupération de l'énergie intermédiaire, pendant laquelle le circuit est éteint et exclusivement accumule une réserve d'énergie à partir de l'onde radio.

Par conséquent, une transmission fiable de la mesure au lecteur peut être assurée, car le niveau d'énergie accumulé est suffisamment élevé.

Le dispositif de commande est optionnellement configuré pour alimenter l'interface exclusivement pendant la phase d'acquisition.

Par conséquent, le capteur analogique peut être alimenté par l'interface. D'ailleurs, si l'interface est exclusivement activée pendant la phase d'acquisition, la consommation d'énergie peut être réduite.

Le dispositif de commande est optionnellement configuré pour alimenter les éléments de l'interface en électricité séquentiellement, p.ex. pour alimenter la connexion électrique pour connecter le capteur, l'amplificateur et le convertisseur analogique-numérique (ADC) séquentiellement.

Par conséquent, comme exclusivement cet élément de l'interface est alimenté, qui est nécessité en ce moment pour acquérir la mesure, la consommation d'énergie peut être réduite.

Le dispositif de commande peut donc être configuré pour alimenter : d'abord exclusivement la connexion électrique pour alimenter le capteur analogique externe et acquérir la mesure analogique du capteur, après exclusivement l'amplificateur pour amplifier le signal de la mesure analogique du capteur, et après exclusivement le convertisseur analogique-numérique (ADC) pour numériser la mesure analogique amplifiée du capteur.

Après la numérisation de la mesure par le convertisseur analogique-numérique (ADC) et pendant la phase d'acquisition, la mesure numérisée est lu et mémorisée par le dispositif de commande.

Donc, la mesure est prête au début de la phase de communication pour être transférée au lecteur.

Le circuit est p.ex. compatible avec (ou communique selon) le Protocole EPC UHF Gen2 Air Interface.

L'invention propose d'ailleurs un système de radio-identification passive fonctionnant dans une bande UHF comprenant : un lecteur configuré pour émettre un signal de lecture périodique, une période du signal de lecture comprenant une phase de récupération de l'énergie et une phase de communication, et un circuit comme décrit ci-dessus.

L'invention propose d'ailleurs un procédé pour opérer un circuit pour étiquette de radio-identification passive fonctionnant dans une bande UHF et pour lire le circuit par un lecteur, selon la revendication 11.

Les caractéristiques et avantages de l'invention apparaitront à la lecture de la description qui va suivre, donnée uniquement à titre d'exemple non limitatif, et faite en référence aux dessins annexés.

### Brève description des dessins

[Fig. 1] La figure 1 est une vue schématique d'une architecture d'un circuit selon l'invention,
[Fig. 2] La figure 2 est une vue schématique d'un diagramme de la phase de récupération de l'énergie selon l'invention, et
[Fig. 3] La figure 3 est une vue schématique d'un diagramme de la phase d'acquisition de l'énergie selon l'invention.

### Description des modes de réalisation

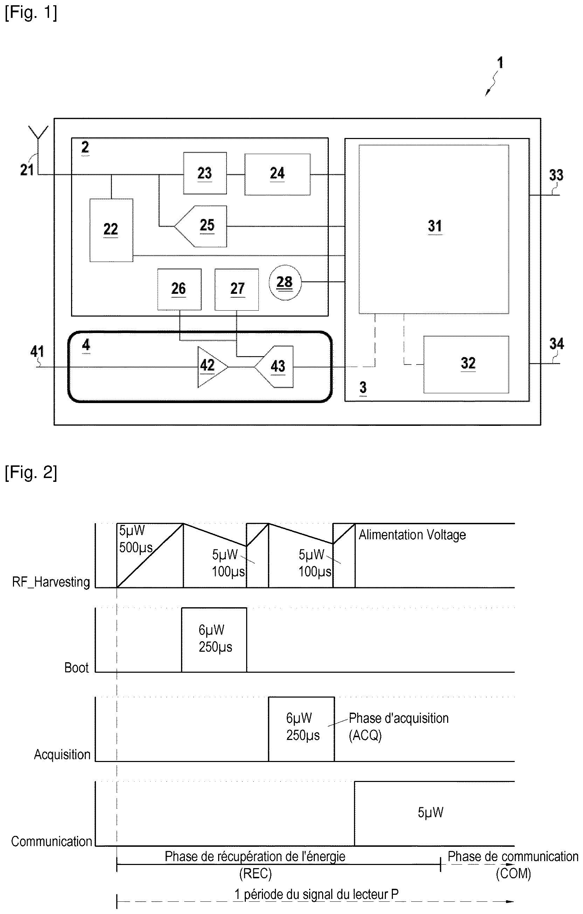

La figure 1 est une vue schématique d'une architecture d'un circuit 1 selon l'invention. Le circuit 1 est du type RFID (de l'anglais « Radio Frequency Identification ») fonctionnant dans une bande UHF et peut servir comme radio-étiquette (ou « RFID tag » en anglais). Le circuit est p.ex. compatible avec (ou communique selon) le Protocole EPC UHF Gen2 Air Interface.

Le circuit se présente p.ex. sous la forme d'une étiquette autocollante collée sur l'objet à surveiller ou encore sous la forme d'une puce intégrée dans l'objet à surveiller. L'objet à surveiller est par exemple une marchandise, un produit ou un organisme vivant dont la surveillance à travers au moins un paramètre physique mesuré est nécessaire.

Le circuit 1 fonctionne d'une manière passive, à savoir qu'il ne comporte pas de batterie ou de moyen de stockage d'énergie. En revanche il utilise l'énergie contenue dans la porteuse du signal du lecteur pour renvoyer une version modulée du signal du lecteur vers le lecteur RFID. Au moins une partie de l'énergie du signal d'interrogation est récupérée par un dispositif de collecte d'énergie pour alimenter les composants du circuit. En détail :
Le circuit 1 comprend un module analogique 2 qui est connecté avec une antenne 21 pour récupérer l'énergie reçue avec l'antenne par l'onde radio émie par un lecteur externe et pour recevoir et transmettre les signaux de communication.

Le module analogique 2 comprend à cet effet une unité de modulation 22 (p.ex. pour transmettre des signaux de communication). Il comprend en outre une unité de démodulation 25 (p.ex. pour recevoir des signaux de communication). Il comprend d'ailleurs une unité de rectification 23 et une unité de régulation d'alimentation 24 pour procéder et/ou pour accumuler une réserve d'énergie à partir de l'onde radio pendant la phase de récupération de l'énergie. L'unité de rectification 23 peut effectuer une conversion énergie radio en énergie continue pour alimenter le circuit. En outre, l'unité de régulation d'alimentation 24 peut effectuer la génération d'une tension continue « propre » pour alimenter la chaîne d'acquisition (p.ex. l'interface) et d'ailleurs la génération de courant continue pour alimenter la chaîne d'acquisition. P.ex. l'énergie accumulée peut être stockée dans une capacité (p.ex. un condensateur).

Le module analogique 2 est connecté avec un module digital 3 (ou dispositif de commande 3). Ce module digital 3 comprend un processeur et/ou une unité de mémorisation 31 apte à traiter des données et/ou stocker des mesures acquises par le capteur. En outre, le module digital 3 comprend optionnellement une interface digitale, p.ex. un SPI ou I2C. Le module digital 3 contrôle le module analogique 2, p.ex. pour être alimenté avec de l'énergie accumulée et pour communiquer avec le lecteur par l'antenne 21. L'accumulation, consommation et stockage de l'énergie est donc contrôlée par le module digital 3 (cf. explication pour la fig. 2 ci-dessous).

Le module digital 3 est d'ailleurs connecté avec une interface (ou module d'interface) 4. L'interface 4 comprend une connexion électrique 41 configurée pour connecter et alimenter en électricité un capteur analogique externe et pour acquérir la mesure analogique du capteur. Elle comprend de plus un amplificateur 42 configuré pour amplifier le signal de la mesure analogique du capteur. Elle comprend en outre un convertisseur analogique-numérique (ADC) 43 configuré pour numériser la mesure analogique amplifiée du capteur. Le signal qui sort du convertisseur 43 est envoyé au module digital 3 pour être stocké et transmis au lecteur. Le convertisseur peut être connecté àun oscillateur 28 pour recevoir un signal « CLK ».

Le circuit peut encore comprendre un capteur analogique interne 26 et/ou un capteur interne de température 27, qui sont p.ex. connectés au convertisseur 43.

La figure 2 est une vue schématique d'un diagramme de la phase de récupération de l'énergie selon l'invention. Le diagramme indique quatre activités (ou 4 sous-diagrammes), dont les axes X indiquent le temps.

Le lecteur externe émet un signal de lecture périodique. Une période P du signal de lecture comprend une phase de récupération de l'énergie REC et une phase de communication COM. Dans la phase de récupération de l'énergie REC une réserve d'énergie est accumulée à partir de l'onde radio du lecteur externe. La phase de récupération de l'énergie REC comprend les phases décrites ci-dessous.

Comme indiqué dans le sous-diagramme « RF_Harvesting » l'énergie stockée monte dans une phase de récupération de l'énergie initiale (p.ex. à 5 micro-Watt pendant 500 micro-secondes), car aucun élément ou unité du circuit est actif et donc toute l'énergie est stockée.

Après, c'est-à-dire quand assez d'énergie est stockée pour permettre une opération fiable, le module digital 3 est démarré pendant une phase de démarrage (« Boot ») (p.ex. avec une consommation de 6 micro-Watt pendant 250 micro-secondes). Dans le même temps, à cause de cette opération du module digital 3, l'énergie stockée se réduit.

Pour cette raison, après la phase de démarrage, la phase de récupération de l'énergie comprend une première phase de récupération de l'énergie intermédiaire, dans laquelle l'énergie stockée augmente de nouveau (p.ex. à 5 micro-Watt pendant 100 micro-secondes), car aucun élément ou unité du circuit est actif et donc toute l'énergie est stockée.

Après, c'est-à-dire quand assez d'énergie est stockée pour permettre une opération fiable, l'interface 4 alimente le capteur analogique externe, acquiert, amplifie et numérise la mesure du capteur pendant la phase d'acquisition (« Aquisition ») (p.ex. avec une consommation de 6 micro-Watt pendant 250 micro-secondes). Dans le même temps, à cause de cette opération du module digital 3, l'énergie stockée se réduit.

Pour cette raison, après la phase d'acquisition, la phase de récupération de l'énergie comprend une deuxième phase de récupération de l'énergie intermédiaire, dans laquelle l'énergie stockée monte de nouveau (p.ex. à 5 micro-Watt pendant 100 micro-secondes), car aucun élément ou unité du circuit est actif et donc toute l'énergie est stockée.

Après, (ou après encore un délai prédéfini) la phase de récupération de l'énergie peut être terminée et la phase de communication COM peut commencer. Pendant la phase de communication, c'est-à-dire pendant la même période, la mesure est transférée au lecteur externe.

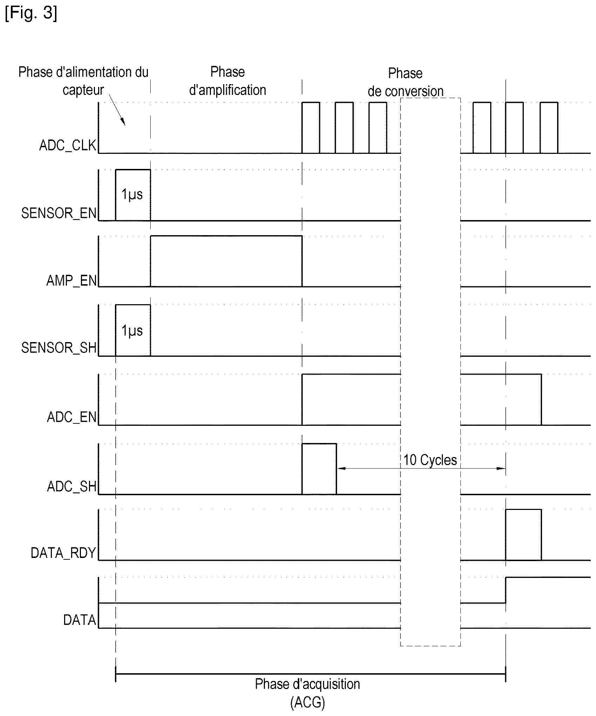

La figure 3 est une vue schématique d'un diagramme de la phase d'acquisition de l'énergie ACQ selon l'invention. Le diagramme indique huit activités (ou 8 sous-diagrammes), dont les axes X indiquent le temps. Pendant la phase d'acquisition de l'énergie ACQ les éléments de l'interface 4 sont alimentés en électricité séquentiellement.

Comme indiqué dans le sous-diagramme « SENSOR_EN » au début seulement la connexion électrique et donc le capteur analogique externe sont alimentés avec de l'énergie (p.ex. pendant 1 micro-secondes) et le signal généré par le capteur est lu et échantillonné. Après, exclusivement l'amplificateur 42 est alimenté pour amplifier le signal de la mesure analogique du capteur (cf. sous-diagramme « AMP_EN »). En suivant, uniquement le convertisseur analogique-numérique (ADC) 43 est alimenté pour numériser la mesure analogique amplifiée du capteur (cf. sous-diagramme « ADC_EN »). Après la numérisation de la mesure par le convertisseur analogique-numérique (ADC) et préférablement encore pendant la phase d'acquisition, la mesure numérisée est lu et mémorisée par le processeur 31, et donc mis à disposition de lu module digital 3 (cf. sous-diagramme « DATA_RDY »).

A cause de cette opération séquentielle, la consommation totale pour acquérir la mesure amplifiée et numérisée peut être réduite, p.ex. à 1 micro-Watt. Pour cette raison, l'acquisition et transmission de la mesure peut être effectuée pendant une seule période du signal du lecteur.

## Revendications

1. Circuit (1) pour étiquette de radio-identification passive fonctionnant dans une bande UHF, configuré pour une communication radio avec un lecteur qui émet un signal de lecture périodique, dans lequel une période du signal de lecture comprend une phase de récupération de l'énergie et une phase de communication,
le circuit comprenant :
- un dispositif de commande (3) configuré pour accumuler une réserve d'énergie à partir de l'onde radio pendant la phase de récupération de l'énergie et pour communiquer avec le lecteur pendant la phase de communication,
- une interface (4) pour connecter un capteur analogique externe, l'interface comprenant :
une connexion électrique (41) configurée pour connecter et alimenter en électricité le capteur analogique externe et pour acquérir la mesure analogique du capteur,
un amplificateur (42) configuré pour amplifier le signal de la mesure analogique du capteur, et
un convertisseur analogique-numérique (ADC) (43) configuré pour numériser la mesure analogique amplifiée du capteur,
dans lequel la phase de récupération de l'énergie comprend une phase d'acquisition pendant laquelle l'interface alimente le capteur analogique externe, acquiert, amplifie et numérise la mesure du capteur,
**caractérisé en ce que**
le dispositif de commande étant en outre configuré pour :
alimenter l'interface (4) pour acquérir la mesure amplifiée et numérisée pendant la phase d'acquisition, et
transférer la mesure amplifiée et numérisée au lecteur pendant la phase de communication de la même période.

2. Circuit (1) selon la revendication 1, dans lequel
le dispositif de commande est configuré pour :
démarrer pendant une phase de démarrage, la phase de démarrage étant avant la phase d'acquisition et pendant la même phase de récupération de l'énergie.

3. Circuit (1) selon la revendication précédente, dans lequel
la phase de récupération de l'énergie comprend en outre avant la phase de démarrage une phase de récupération de l'énergie initiale, pendant laquelle le circuit est éteint et exclusivement accumule une réserve d'énergie à partir de l'onde radio.

4. Circuit (1) selon la revendication précédente 2 ou 3, dans lequel
la phase de récupération de l'énergie comprend en outre entre la phase de démarrage et la phase d'acquisition une première phase de récupération de l'énergie intermédiaire, pendant laquelle le circuit est éteint et exclusivement accumule une réserve d'énergie à partir de l'onde radio.

5. Circuit (1) selon une des revendications précédentes 2-4, dans lequel
la phase de récupération de l'énergie comprend en outre après la phase d'acquisition et avant la phase de communication une deuxième phase de récupération de l'énergie intermédiaire, pendant laquelle le circuit est éteint et exclusivement accumule une réserve d'énergie à partir de l'onde radio.

6. Circuit (1) selon une des revendications précédentes, dans lequel
le dispositif de commande est configuré pour alimenter l'interface (4) exclusivement pendant la phase d'acquisition.

7. Circuit (1) selon une des revendications précédentes, dans lequel
le dispositif de commande (3) est configuré pour alimenter les éléments de l'interface en électricité séquentiellement,
notamment pour alimenter la connexion électrique (41) pour connecter le capteur, l'amplificateur et le convertisseur analogique-numérique (ADC) séquentiellement.

8. Circuit (1) selon une des revendications précédentes, dans lequel
le dispositif de commande (3) est configuré pour alimenter :
d'abord exclusivement la connexion électrique pour alimenter le capteur analogique externe et acquérir la mesure analogique du capteur,
après exclusivement l'amplificateur pour amplifier le signal de la mesure analogique du capteur, et
après exclusivement le convertisseur analogique-numérique (ADC) pour numériser la mesure analogique amplifiée du capteur.

9. Circuit (1) selon une des revendications précédentes, dans lequel
après la numérisation de la mesure par le convertisseur analogique-numérique (ADC) et pendant la phase d'acquisition, la mesure numérisée est lu et mémorisée par le dispositif de commande.

10. Système de radio-identification passive fonctionnant dans une bande UHF comprenant :
un lecteur configuré pour émettre un signal de lecture périodique, une période du signal de lecture comprenant une phase de récupération de l'énergie et une phase de communication, et
un circuit (1) selon une des revendications précédentes.

11. Procédé pour opérer un circuit (1) pour étiquette de radio-identification passive fonctionnant dans une bande UHF et pour lire le circuit par un lecteur, le circuit étant connecté avec un capteur analogique externe, dans lequel
le lecteur émet un signal de lecture périodique, dans lequel une période du signal de lecture comprend une phase de récupération de l'énergie et une phase de communication,
le circuit (1) accumule une réserve d'énergie à partir de l'onde radio pendant la phase de récupération de l'énergie, et communique avec le lecteur pendant la phase de communication, dans lequel
le capteur analogique externe est alimenté par le circuit pendant la phase de récupération de l'énergie, de façon que le circuit acquière, amplifie et numérise une mesure du capteur pendant la même phase de récupération de l'énergie,
**caractérisé en ce que**
le circuit (1) transfère la mesure du capteur numérisée au lecteur pendant la phase de communication qui suit la phase de récupération de l'énergie et est de la même période.

## Patentansprüche

1. Schaltung (1) für ein passives Funkidentifikationsetikett mit Betrieb in einem UHF-Band, die für eine Funkkommunikation mit einem Leser ausgestaltet ist, der ein periodisches Lesesignal sendet, wobei eine Periode des Lesesignals eine Phase der Rückgewinnung der Energie und eine Kommunikationsphase umfasst,
wobei die Schaltung umfasst:
- eine Steuervorrichtung (3), die dazu ausgestaltet ist, eine Energiereserve ausgehend von der Funkwelle während der Phase der Rückgewinnung der Energie zu akkumulieren und mit dem Leser während der Kommunikationsphase zu kommunizieren,
- eine Schnittstelle (4) zum Verbinden eines externen analogen Sensors, wobei die Schnittstelle umfasst:
eine elektrische Verbindung (41), die dazu ausgestaltet ist, den externen analogen Sensor zu verbinden und mit Strom zu versorgen und die analoge Messung des Sensors zu erfassen,
einen Verstärker (42), der dazu ausgestaltet ist, das analoge Messignal des Sensors zu verstärken, und
einen Analog-Digital-Wandler (ADC) (43), der dazu ausgestaltet ist, die verstärkte analoge Messung des Sensors zu digitalisieren,
wobei die Phase der Rückgewinnung der Energie eine Erfassungsphase umfasst, während der die Schnittstelle den externen analogen Sensor mit Strom versorgt und die Messung des Sensors erfasst, verstärkt und digitalisiert,
**dadurch gekennzeichnet, dass**
die Steuervorrichtung ferner ausgestaltet ist zum:
Versorgen der Schnittstelle (4) mit Strom, um die während der Erfassungsphase verstärkte und digitalisierte Messung zu erfassen, und
Übertragen der verstärkten und digitalisierten Messung an den Leser während der Kommunikationsphase derselben Periode.

2. Schaltung (1) nach Anspruch 1, wobei
die Steuervorrichtung ausgestaltet ist zum:
Starten während einer Startphase, wobei die Startphase vor der Erfassungsphase und während derselben Phase der Rückgewinnung der Energie stattfindet.

3. Schaltung (1) nach dem vorhergehenden Anspruch, wobei die Phase der Rückgewinnung der Energie ferner vor der Startphase eine Phase der Rückgewinnung der Ausgangsenergie umfasst, während der die Schaltung ausgeschaltet ist und ausschließlich eine Energiereserve ausgehend von der Funkwelle akkumuliert.

4. Schaltung (1) nach dem vorhergehenden Anspruch 2 oder 3, wobei
die Phase der Rückgewinnung der Energie ferner zwischen der Startphase und der Erfassungsphase eine erste Phase der Rückgewinnung der Zwischenenergie umfasst, während der die Schaltung ausgeschaltet ist und ausschließlich eine Energiereserve ausgehend von der Funkwelle akkumuliert.

5. Schaltung (1) nach einem der vorhergehenden Ansprüche 2 bis 4, wobei
die Phase der Rückgewinnung der Energie ferner nach der Erfassungsphase und vor der Kommunikationsphase eine zweite Phase der Rückgewinnung der Zwischenenergie umfasst, während der die Schaltung ausgeschaltet ist und ausschließlich eine Energiereserve ausgehend von der Funkwelle akkumuliert.

6. Schaltung (1) nach einem der vorhergehenden Ansprüche, wobei
die Steuervorrichtung dazu ausgestaltet ist, die Schnittstelle (4) ausschließlich während der Erfassungsphase mit Strom zu versorgen.

7. Schaltung (1) nach einem der vorhergehenden Ansprüche, wobei
die Steuervorrichtung (3) dazu ausgestaltet ist, die Elemente der Schnittstelle sequentiell mit Strom zu versorgen,
insbesondere die elektrische Verbindung (41) mit Strom zu versorgen, um den Sensor, den Verstärker und den Analog-Digital-Wandler (ADC) sequentiell zu verbinden.

8. Schaltung (1) nach einem der vorhergehenden Ansprüche, wobei
die Steuervorrichtung (3) dazu ausgestaltet ist mit Strom zu versorgen:
zuerst ausschließlich die elektrische Verbindung, um den externen analogen Sensor mit Strom zu versorgen und die analoge Messung des Sensors zu erfassen,
danach ausschließlich den Verstärker, um das Signal der analogen Messung des Sensors zu verstärken, und
danach ausschließlich den Analog-Digital-Wandler (ADC), um die verstärkte analoge Messung des Sensors zu digitalisieren.

9. Schaltung (1) nach einem der vorhergehenden Ansprüche, wobei
nach der Digitalisierung der Messung durch den Analog-Digital-Wandler (ADC) und während der Erfassungsphase die digitalisierte Messung durch die Steuervorrichtung gelesen und gespeichert wird.

10. Passives Funkidentifikationssystem mit Betrieb in einem UHF-Band, umfassend:
einen Leser, der dazu ausgestaltet ist, ein periodisches Lesesignal zu senden, wobei eine Periode des Lesesignals eine Phase der Rückgewinnung der Energie und eine Kommunikationsphase umfasst, und
eine Schaltung (1) nach einem der vorhergehenden Ansprüche.

11. Verfahren zum Betreiben einer Schaltung (1) für ein passives Funkidentifikationsetikett mit Betrieb in einem UHF-Band und zum Lesen der Schaltung durch einen Leser, wobei die Schaltung mit einem externen analogen Sensor verbunden ist, wobei
der Leser ein periodisches Lesesignal sendet, wobei
eine Periode des Lesesignals eine Phase der Rückgewinnung der Energie und eine Kommunikationsphase umfasst,
die Schaltung (1) eine Energiereserve ausgehend von der Funkwelle während der Phase der Rückgewinnung der Energie akkumuliert und mit dem Leser während der Kommunikationsphase kommuniziert, wobei
der externe analoge Sensor durch die Schaltung während der Phase der Rückgewinnung der Energie mit Strom versorgt wird, derart dass die Schaltung eine Messung des Sensors während derselben Phase der Rückgewinnung der Energie erfasst, verstärkt und digitalisiert,
**dadurch gekennzeichnet, dass**
die Schaltung (1) die digitalisierte Messung des Sensors an den Leser während der Kommunikationsphase überträgt, die auf die Phase der Rückgewinnung der Energie folgt und in derselben Periode liegt.

## Claims

1. A circuit (1) for a passive radio-identification tag operating in a UHF band, configured for radio communication with a reader which sends a periodic read signal, wherein a period of the read signal comprises an energy recovery phase and a communication phase, the circuit comprising:
- a control device (3) configured to accumulate an energy reserve from the radio wave during the energy recovery phase and to communicate with the reader during the communication phase,
- an interface (4) to connect an external analogue sensor, the interface comprising:
an electrical connection (41) configured to connect and supply the external analogue sensor with electricity and to acquire the analogue measurement from the sensor,
an amplifier (42) configured to amplify the signal of the analogue measurement from the sensor, and
an analogue-digital converter (ADC) (43) configured to digitise the amplified analogue measurement from the sensor, wherein the energy recovery phase comprises an acquisition phase during which the interface supplies the external analogue sensor, acquires, amplifies and digitises the measurement from the sensor,
**characterised in that**
the control device is also configured to:
supply the interface (4) to acquire the amplified and digitised measurement during the acquisition phase, and
transfer the amplified and digitised measurement to the reader during the communication phase of the same period.

2. The circuit (1) according to claim 1, wherein the control device is configured to:
start up during a start-up phase, the start-up phase being prior to the acquisition phase and during the same energy recovery phase.

3. The circuit (1) according to the preceding claim, wherein
prior to the start-up phase the energy recovery phase also comprises an initial energy recovery phase, during which the circuit is switched off and exclusively accumulates an energy reserve from the radio wave.

4. The circuit (1) according to the preceding claim 2 or 3, wherein
between the start-up phase and the acquisition phase the energy recovery phase also comprises a first intermediate energy recovery phase, during which the circuit is switched off and exclusively accumulates an energy reserve from the radio wave.

5. The circuit (1) according to any one of the preceding claims 2 to 4,
wherein
after the acquisition phase and prior to the communication phase the energy recovery phase also comprises a second intermediate energy recovery phase, during which the circuit is switched off and exclusively accumulates an energy reserve from the radio wave.

6. The circuit (1) according to any one of the preceding claims, wherein the control device is configured to supply the interface (4) exclusively during the acquisition phase.

7. The circuit (1) according to any one of the preceding claims, wherein the control device (3) is configured to supply the elements of the interface with electricity sequentially,
especially to supply the electrical connection (41) to connect the sensor, the amplifier and the analogue-digital converter (ADC) sequentially.

8. The circuit (1) according to any one of the preceding claims, wherein the control device (3) is configured to supply:
first exclusively the electrical connection to supply the external analogue sensor and acquire the analogue measurement from the sensor,
after exclusively the amplifier to amplify the signal of the analogue measurement from the sensor, and
after exclusively the analogue-digital converter (ADC) to digitise the amplified analogue measurement from the sensor.

9. The circuit (1) according to any one of the preceding claims, wherein after digitising of the measurement by the analogue-digital converter (ADC) and during the acquisition phase, the digitised measurement is read and saved by the control device.

10. A passive radio-identification system operating in a UHF band comprising:
a reader configured to send a periodic read signal, a period of the read signal comprising an energy recovery phase and a communication phase, and
a circuit (1) according to any one of the preceding claims.

11. A process for operating a circuit for a passive radio-identification tag (1) operating in a UHF band and for reading the circuit by a reader, the circuit being connected to an external analogue sensor, wherein
the reader sends a periodic read signal, wherein
a period of the read signal comprises an energy recovery phase and a communication phase,
the circuit (1) accumulates an energy reserve from the radio wave during the energy recovery phase, and communicates with the reader during the communication phase, wherein
the external analogue sensor is supplied by the circuit during the energy recovery phase so that the circuit acquires, amplifies and digitises a measurement from the sensor during the same energy recovery phase, **characterised in that**
the circuit (1) transfers the digitised measurement from the sensor to the reader during the communication phase which follows the energy recovery phase and is of the same period.
